# EUROPEAN PATENT APPLICATION

(11) **EP 4 092 059 A1**
(43) Date of publication of application: **23.11.2022**
(21) Application number: 21175172.2
(22) Date of filing: 21.05.2021
(51) Int. Cl.: C08F 222/10, C09J 4/00, C09J 143/02, C08F 220/18, C08K 5/00, C08K 5/3435, C08K 3/22

(54) **CURABLE PRECURSOR OF AN ADHESIVE COMPOSITION**

(71) Applicant: 3M Innovative Properties Company, Saint Paul, MN 55133-3427 (US)
(72) Inventor: Sprott, Sascha, 45219 Essen (DE); Shaaban, Ahmad, 50825 Köln (DE); Claussen, Kai Uwe, 81241 Munich (DE); Bissinger, Dr. Peter, 86911 Diessen (DE); Fritz, Emelie, 41564 Kaarst (DE); Jung, Adrian Thomas, 41564 Kaarst (DE)
(74) Representative: Mössner, Brigitte

(57) **Abstract**

The present disclosure relates to a curable precursor of an adhesive composition, the curable precursor comprising:
(a) a radically (co)polymerizable (meth)acrylate-based component comprising
(i) C₁-C₃₂ (meth)acrylic acid ester monomers; and
(ii) an ethylenically unsaturated acidic compound;

(b) a crosslinker for the (meth)acrylate-based component, which comprises at least one acid-functional group derived from phosphoric acid and at least one radically (co)polymerizable reactive group; and
(c) a nitroxide.

The present disclosure further relates to a process for making a cured composition from said curable precursor and to the use of said curable precursor for adhesive applications and/or for thermal management applications in the automotive industry.

## Description

### Technical Field

The present disclosure relates to a curable precursor of an adhesive composition comprising a radically (co)polymerizable (meth)acrylate-based component.

### Background

Curable compositions have been known for years as suitable for use in a variety of applications that include general-use industrial applications such as adhesives and coatings, as well as high-performance applications in the electronics industry such as e.g. for sealing and bonding electronic components. With broadened use of curable compositions over the years, performance requirements have become more and more demanding with respect to, in particular, curing profile, adhesion performance, storage stability, handleability and processability characteristics, and compliance with environment and health requirements. When curable compositions are additionally required to provide thermal conductivity, the formulation of suitable compositions becomes even more challenging.

During storage of acrylic curable compositions, self-polymerization can occur, so usually inhibitors are used for prevention. For most inhibitors, oxygen is needed to ensure their functionality. Highly filled adhesive acrylic compositions with high viscosity, like acrylic thermal management compositions, and also other adhesive acrylic curable compositions, exhibit a limited oxygen diffusion. As a consequence, core polymerization may occur, particularly during the storage of larger quantities of the highly filled acrylic compositions, for example when storing the curable compositions in drums with a volume of 100 or 200 liters. During the storage of the curable compositions in drums, oxygen is consumed by the inhibitors and due to the limited diffusion of oxygen into the core region of the drums, over time not enough oxygen is available in the core region to ensure proper functionality of the inhibitors, resulting in core polymerization.

In adhesive acrylic compositions, acids may enhance the adhesive strength. With the presence of acids, such as acrylic acid, in acrylic curable compositions, it is even more difficult to stabilize the curable compositions for storage, as acids are highly reactive and tend to destabilize the compositions, resulting in a higher tendency for core polymerization.

WO 2019/040596 A1 discloses an inhibitor combination for increased shelf life of urethan (meth)acrylate compositions. The resin composition of WO 2019/040596 A1 comprises a urethane (meth)acrylate and an inhibitor package comprising at least one nitroxide radical and at least one base, wherein the base is selected from the group consisting of tertiary amine bases, quaternary ammonium hydroxides, alkoxides, or hydroxides. When no base is added to the nitroxide, or when acids are added to the composition, a significantly reduced shelf life results.

There is still a need for a curable precursor of an adhesive acrylic composition having a good storage stability and being curable at room temperature, particularly if the curable precursor comprises acrylic acid monomers.

As used herein, "a", "an", "the", "at least one" and "one or more" are used interchangeably. The term "comprise" shall include also the terms "consist essentially of" and "consists of".

### Summary

In a first aspect, the present disclosure relates to a curable precursor of an adhesive composition, the curable precursor comprising:
(a) a radically (co)polymerizable (meth)acrylate-based component comprising
   (i) C₁-C₃₂ (meth)acrylic acid ester monomers, and
   (ii) an ethylenically unsaturated acidic compound;
(b) a crosslinker for the (meth)acrylate-based component, which comprises at least one acid-functional group derived from phosphoric acid and at least one radically (co)polymerizable reactive group; and
(c) a nitroxide.

In another aspect, the present disclosure also relates to a process for making a cured composition from the curable precursor as disclosed herein, the process comprising
providing a curable precursor, wherein the curable precursor comprises
(a) a radically (co)polymerizable (meth)acrylate-based component comprising
   (i) C₁-C₃₂ (meth)acrylic acid ester monomers; and
   (ii) an ethylenically unsaturated acidic compound;
(b) a crosslinker for the (meth)acrylate-based component, which comprises at least one acid-functional group derived from phosphoric acid and at least one radically (co)polymerizable reactive group; and
(c) a nitroxide,
providing an initiator for radical polymerization of the curable precursor,
mixing the curable precursor and the initiator, and
curing the mixture of the curable precursor and the initiator.

In yet a further aspect, the present disclosure relates to the use of a curable precursor as disclosed herein, for adhesive applications and/or for thermal management applications in the automotive industry.

The curable precursor disclosed herein has a good storage stability and a low tendency for core polymerization during storage. The curable precursor disclosed herein may be stored in 100 or 200 Liter drums for several months. In some embodiments of the present disclosure, the curable precursor is a highly filled thermally conductive curable precursor, and even for these highly filled curable precursors with a low oxygen diffusion, the curable precursor has a good storage stability and a low tendency for core polymerization during storage.

Despite the curable precursor disclosed herein is stabilized for storage, a fast curing at room temperature is still possible, due to the smalls amounts of nitroxide inhibitor needed for prevention of core polymerization. The performance of the cured product, i.e. properties such as hardness, overlap shear strength, elongation at break and thermal conductivity, is not adversely affected.

Surprisingly, it has been found that small amounts of nitroxides are capable to effectively prevent core polymerization in acrylic compositions comprising acids such as acrylic acid or other polymerizable monomers having an acid-functional group. The person skilled in the art would have expected that nitroxides cannot be used when acids, particularly acrylic acid, are comprised in the curable composition. The person skilled in the art also would have expected that nitroxides can only be used as inhibitors in a basic environment, and that the absence of acidic components would be required.

### Detailed Description

Disclosed herein is a curable precursor of an adhesive composition, the curable precursor comprising:
(a) a radically (co)polymerizable (meth)acrylate-based component comprising
   (i) C₁-C₃₂ (meth)acrylic acid ester monomers; and
   (ii) an ethylenically unsaturated acidic compound;
(b) a crosslinker for the (meth)acrylate-based component, which comprises at least one acid-functional group derived from phosphoric acid and at least one radically (co)polymerizable reactive group; and
(c) a nitroxide.

A "curable precursor" is meant to designate a composition which can be cured using an initiator. The term "initiator" is meant to refer to a substance or a group of substances able to start or initiate or contribute to the curing process of the curable precursor.

A "radically (co)polymerizable component" is meant to designate a composition which can be cured using an initiator containing or able to produce a free radical. A radically (co)polymerizable component may contain only one, two, three or more radically (co)polymerizable groups. Typical examples of radically (co)polymerizable groups include unsaturated carbon groups, such as a vinyl group being present e.g in a (meth)acrylate group.

As used herein, "(meth)acryl" is a shorthand term referring to "acryl" and/or "methacryl". For example, a "(meth)acrylate based component" refers to "acrylate based component" and/or "methacrylate based component", and "C₁-C₃₂ (meth)acrylic acid ester monomers" refers to "C₁-C₃₂ acrylic acid ester monomers" and/or "C₁-C₃₂ methacrylic acid ester monomers".

As used herein, "(co)polymerizable" is a shorthand term referring to "polymerizable" and/or "copolymerizable".

A "monomer" is any chemical substance which can be characterized by a chemical formula, bearing radically (co)polymerizable unsaturated groups (including (meth)acrylate groups) which can be polymerized to oligomers or polymers thereby increasing the molecular weight. The molecular weight of monomers can usually simply be calculated based on the chemical formula given.

The curable precursor of an adhesive composition disclosed herein comprises (a) a radically (co)polymerizable (meth)acrylate-based component, i.e. a radically (co)polymerizable acrylate-based component or a radically (co)polymerizable methacrylate-based component or a combination thereof.

The radically (co)polymerizable (meth)acrylate-based component comprises (i) C₁-C₃₂ (meth)acrylic acid ester monomers, i.e. C₁-C₃₂acrylic acid ester monomers, or C₁-C₃₂methacrylic acid ester monomers, or a combination thereof. The C₁-C₃₂(meth)acrylic acid ester monomers may be linear or branched C₁-C₃₂(meth)acrylic acid ester monomers. Preferably, the radically (co)polymerizable (meth)acrylate-based component comprises C₁-C₃₂acrylic acid ester monomers. The C₁-C₃₂(meth)acrylic acid ester monomers for use in the radically (co)polymerizable (meth)acrylate-based component may be selected from the group consisting of iso-octyl (meth)acrylate, 2-ethylhexyl (meth)acrylate, 2-propylheptyl (meth)acrylate, butyl (meth)acrylate, cyclohexyl (meth)acrylate, methyl (meth)acrylate, benzyl (meth)acrylate, hydroxyethyl (meth)acrylate, hydroxypropyl (meth)acrylate, isobornyl (meth)acrylate, tetrahydrofurfuryl (meth)acrylate, and any mixtures thereof.

The C₁-C₃₂(meth)acrylic acid ester monomers may have no functional groups.

The curable precursor may comprise from 1 to 50 wt.%, from 1 to 30 wt.%, from 1 to 20 wt.%, from 2 to 15 wt.%, or from 3 to 10 wt.% of the C₁-C₃₂(meth)acrylic acid ester monomers, wherein the weight percentages are based on the total weight of the curable precursor.

The radically (co)polymerizable (meth)acrylate-based component further comprises (ii) an ethylenically unsaturated acidic compound.

An "ethylenically unsatured acidic compound" is meant to include monomers, oligomers, and polymers having ethylenic unsaturation and acid and/or acid-precursor functionality.

Acidic-precursor functionalities include, e.g. anhydrides such as -CO-O-CO-, acid halides and pyrophosphates.

The acidic group preferably comprises one or more carboxylic acid residues, such as -COOH, phosphoric acid residues, such as -O-P(O)(OH)OH, phosphonic acid residues, or sulfonic acid residues, such as -SO₃H.

"Polymer" or "polymeric material" are used interchangeably to refer to a homopolymer, copolymer, terpolymer etc.

Specific examples of ethylenically unsaturated acidic compounds include, but are not limited to glycerol phosphate mono(meth)acrylates, glycerol phosphate di(meth)acrylates, hydroxyethyl (meth)acrylate phosphates, bis glycerol phosphate di(meth)acrylates, bis((meth)acryloxyethyl) phosphate, ((meth)acryloxypropyl) phosphate, bis((meth)acryloxypropyl) phosphate, bis((meth)acryloxy)propyloxy phosphate, (meth)acryloxyhexyl phosphate, bis((meth)acryloxyhexyl) phosphate, (meth)acryloxyoctyl phosphate, bis((meth)acryloxyoctyl) phosphate, (meth)acryloxydecyl phosphate, bis((meth)acryloxydecyl) phosphate, caprolactone methacrylate phosphate, di or tri(meth)acrylated citric acid, poly(meth)acrylated oligomaleic acid, poly(meth)acrylated polymaleic acid, poly(meth)acrylated poly(meth)acrylic acid, poly(meth)acrylated polycarboxyl-polyphosphonic acid, poly(meth)acrylated polychlorophosphoric acid, poly(meth)acrylated polysulfonate, poly(meth)acrylated polyboric acid, and the like.

The reaction products of (meth)acrylic acid with alkane diols (e.g. C₂ to C₂₀ or C₂ to C₁₂ or C₆ to C₁₀) and phosphorous oxide were found to be suitable as well.

Also monomers, oligomers, and polymers of unsaturated carboxylic acids such as (meth)acrylic acid, aromatic (meth)acrylated acids (e g., methacrylated trimellitic acids), and anhydrides thereof can be used. In some embodiments, acrylic acid or methacrylic acid is used as ethylenically unsaturated acidic compound (ii).

The curable precursor may comprise from 0.1 to 20 wt.%, from 0.1 to 10 wt.%, from 0.1 to 5 wt.%, from 0.1 to 3 wt.%, from 0.1 to 2 wt.%, from 0.2 to 2 wt.%, or from 0.2 to 1 wt.% of the ethylenically unsaturated acidic compound, wherein the weight percentages are based on the total weight of the curable precursor.

The curable precursor may comprise from 1 to 50 wt.%, from 1 to 30 wt.%, from 1 to 20 wt.%, or from 10 to 15 wt.% of the (meth)acrylate-based component, wherein the weight percentages are based on the total weight of the curable precursor.

The curable precursor of an adhesive composition further comprises (b) a crosslinker for the (meth)acrylate-based component, which comprises at least one acid-functional group derived from phosphoric acid and at least one radically (co)polymerizable reactive group.

The crosslinker for the (meth)acrylate-based component comprises at least one acid-functional group derived from phosphoric acid. The crosslinker for the (meth)acrylate-based component may comprise at least two acid-functional group derived from phosphoric acid.

The at least one acid-functional group derived from phosphoric acid of the crosslinker may comprise at least one P-OH group.

The at least one acid-functional group derived from phosphoric acid of the crosslinker may be selected from the group consisting of monoesters of phosphoric acid, diesters of phosphoric acid, triesters of phosphoric acid, esters of diphosphoric acid, diesters of diphosphoric acid, and any combinations or mixtures thereof.

The at least one acid-functional group derived from phosphoric acid of the crosslinker may be selected from the group consisting of monoesters of phosphoric acid and C₁-C₆ polyol derivatives, diesters of phosphoric acid and C₁-C₆ polyol derivatives, triesters of phosphoric acid and C₁-C₆ polyol derivatives, esters of diphosphoric acid and C₁-C₆ polyol derivatives, diesters of diphosphoric acid and C₁-C₆ polyol derivatives, and any combinations or mixtures thereof.

According to one preferred aspect of the disclosure, the at least one acid-functional group derived from phosphoric acid of the crosslinker is selected from the group consisting of monoesters of phosphoric acid and derivatives of 1,3-isomer of glycerol, diesters of phosphoric acid and derivatives of 1,3-isomer of glycerol, diesters of diphosphoric acid and derivatives of 1,3-isomer of glycerol, and any combinations or mixtures thereof.

According to another preferred aspect of the disclosure, the at least one acid-functional group derived from phosphoric acid of the crosslinker is selected from the group consisting of monoesters of phosphoric acid and derivatives of 1,2-isomer of glycerol, diesters of phosphoric acid and derivatives of 1,2-isomer of glycerol, diesters of diphosphoric acid and derivatives of 1,2-isomer of glycerol, and any combinations or mixtures thereof.

The crosslinker for the (meth)acrylate-based component comprises at least one radically (co)polymerizable reactive group.

The crosslinker for the (meth)acrylate-based component may comprise at least two radically (co)polymerizable reactive groups.

In a preferred aspect of the disclosure, the crosslinker comprises at least one radically (co)polymerizable reactive group selected from the group consisting of ethylenically unsaturated groups.

In a more preferred aspect of the disclosure, the ethylenically unsaturated groups comprised in the crosslinker are selected from the group consisting of (meth)acrylic groups, vinyl groups, styryl groups, and any combinations or mixtures thereof. More preferably, the ethylenically unsaturated groups are selected from the group consisting of methacrylic groups, acrylic groups, and any combinations or mixtures thereof.

In a particularly preferred aspect of the disclosure, the ethylenically unsaturated groups comprised in the crosslinker are selected from the group of methacrylic groups.

Advantageously, the crosslinker for use herein is an ethylenically unsaturated compound.

According to a particularly preferred aspect, the crosslinker for use in the present disclosure comprises the reaction product(s) of the reaction of phosphoric acid with either 1,3-glycerol dimethacrylate or 1,2-glycerol dimethacrylate.

According to another particularly preferred aspect, the crosslinker for use in the present disclosure is selected from the group consisting of 1,3-glycerol dimethacrylate phosphate monoester, 1,2-glycerol dimethacrylate phosphate monoester, 1,3-glycerol dimethacrylate phosphate diester, 1,2-glycerol dimethacrylate phosphate diester, 1,3-glycerol dimethacrylate diphosphate diester, 1,2-glycerol dimethacrylate diphosphate diester, and any mixtures thereof.

In an advantageous aspect of the present disclosure, the crosslinker for the (meth)acrylate-based component is (co)polymerizable with monomers (i) and/or (ii) of the (meth)acrylate-based component.

In some embodiments, the crosslinker (b) may further have the function of an adhesion promoter.

The curable precursor of the present disclosure may comprise from 0.01 to 10 wt.%, from 0.01 to 8 wt.%, from 0.05 to 6 wt.%, from 0.05 to 5 wt.%, from 0.05 to 4 wt.%, from 0.1 to 2 wt.%, or even from 0.1 to 1 wt.%, of the crosslinker for the (meth)acrylate-based component, wherein the weight percentages are based on the total weight of the curable precursor.

The curable precursor disclosed herein further comprises a nitroxide. Nitroxides are free radicals comprising a R₂N-O• functional group. They may also be referred to as nitroxyl radicals or aminoxyl radicals.

The nitroxide has the function of an inhibitor for the curable precursor disclosed herein. Surprisingly, the nitroxide has the function of an inhibitor and can effectively prevent core polymerization despite the presence of acidic compounds in the curable precursor. Acidic compounds are comprised as ethylenically unsaturated acidic compound in the a radically (co)polymerizable (meth)acrylate-based component of the curable precursor, and acidic compounds are comprised as at least one acid-functional group derived from phosphoric acid in the crosslinker for the (meth)acrylate-based component. The person skilled in the art would have expected that nitroxides would not be able to act as inhibitor in an acidic environment, and that the addition of a base and a basic environment would be required for the nitroxides to be able to act as inhibitor.

The nitroxide may be selected from the group consisting of 2,2,6,6-tetramethylpiperidine-1-oxyl (TEMPO), derivatives thereof, and combinations thereof.

The nitroxide may be selected from the group consisting of 2,2,6,6-tetramethylpiperidine-1-oxyl (TEMPO), 4-hydroxy-2,2,6,6-tetramethylpiperidine-1-oxyl (4-hydroxy-TEMPO, TEMPOL), 4-amino-2,2,6,6-tetramethylpiperidine-1-oxyl (4-amino-TEMPO), 4-oxo-2,2,6,6-tetramethylpiperidine-1-oxyl (4-oxo-TEMPO), 1-oxyl-2,2,6,6-tetramethylpiperidine-4-yl acetate, 1-oxyl-2,2,6,6-tetramethylpiperidine-4-yl 2-ethylhexanoate, 1-oxyl-2,2,6,6-tetramethylpiperidine-4-yl stearate, 1-oxyl-2,2,6,6-tetramethylpiperidine-4-yl benzoate, 1-oxyl-2,2,6,6-tetramethylpiperidine-4-yl 4-tert-butylbenzoate, bis(1-oxyl-2,2,6,6-tetramethylpiperidine-4-yl)succinate, bis(1-oxyl-2,2,6,6-tetramethylpiperidine-4-yl)adipate, bis(1-oxyl-2,2,6,6-tetramethylpiperidine-4-yl)sebacate, bis(1-oxyl-2,2,6,6-tetramethylpiperidine-4-yl)n-butylmalonate, bis(1-oxyl-2,2,6,6-tetramethylpiperidine-4-yl)phthalate, bis(1-oxyl-2,2,6,6-tetramethylpiperidine-4-yl)isophthalate, bis(1-oxyl-2,2,6,6-tetramethylpiperidine-4-yl)terephthalate, bis(1-oxyl-2,2,6,6-tetramethylpiperidine-4-yl)hexahydroterephthalate, N, N'-bis(1-oxyl-2,2,6,6-tetramethylpiperidine-4-yl)adipamine, N-1-oxyl-2,2,6,6-tetramethylpiperidine-4-yl-dodecylsuccinimide, 1-oxyl-4-methoxy-2,2,6,6-tetramethylpiperidine, 1-oxyl-4-amino-2,2,6,6-tetramethylpiperidine, and 1-oxyl-4-acetamino-2,2,6,6-tetramethylpiperidine.

Preferably, the nitroxide is 4-hydroxy-2,2,6,6-tetramethylpiperidine-1-oxyl (4-hydroxy-TEMPO, TEMPOL).

The curable precursor may comprise at least 0.001 wt.%, or at least 0.002 wt.%, or at least 0.003 wt.% of the nitroxide, based on the total weight of the curable precursor.

The curable precursor may comprise at most 0.1 wt.%, or at most 0.05 wt.%, or at most 0.02 wt.%, or at most 0.01 wt.%, or at most 0.008 wt.%, or at most 0.006 wt.%, or at most 0.005 wt.%, of the nitroxide, based on the total weight of the curable precursor.

The curable precursor may comprise from 0.001 to 0.1 wt.%, or from 0.001 to 0.05 wt.%, or from 0.001 to 0.02 wt.%, or from 0.001 to 0.01 wt.%, or from 0.001 to 0.008 wt.%, or from 0.002 to 0.1 wt.%, or from 0.002 to 0.05 wt.%, or from 0.002 to 0.02 wt.%, or from 0.002 to 0.01 wt.%, or from 0.002 to 0.008 wt.%, or from 0.002 to 0.004 wt.%, or from 0.003 to 0.1 wt.%, or from 0.003 to 0.05 wt.%, or from 0.003 to 0.02 wt.%, or from 0.003 to 0.01 wt.%, or from 0.003 to 0.008 wt.%, or from 0.003 to 0.006 wt.%, or from 0.003 to 0.005 wt.%, or from 0.003 to less than 0.005 wt.%, of the nitroxide, based on the total weight of the curable precursor.

The curable precursor disclosed herein may further comprise (d) a polyether oligomer having a number average molecular weight of at least 2000 g/mol and which comprises at least one radically (co)polymerizable reactive group.

Unless otherwise indicated, the number average molecular weight of the polyether oligomer for use herein is determined by conventional gel permeation chromatography (GPC) using appropriate techniques well known to those skilled in the art.

Without wishing to be bound by theory, it is believed that the polyether oligomer as described above acts as a reactive diluent and rheological modifier for the curable precursor, which contributes to provide the curable precursor with outstanding flexibility characteristics. The polyether oligomer is also believed to beneficially impact the adhesion properties of the curable precursor, due in particular to the beneficial surface wetting properties provided in particular by the oligomeric polyether moiety. For curable precursors comprising thermally conductive particles, the polyether oligomer as described above is also believed to provide advantageous surface interactions with the thermally conductive particles, which in turn contribute to enable relatively high loading of thermally conductive particles due in particular to the improved compatibility provided between the thermally conductive particles and the surrounding (meth)acrylate-based polymeric matrix. Further, the polyether oligomer for use herein is also believed to beneficially impact the shear strength, due in particular to the light crosslinking effect provided by the radically (co)polymerizable reactive group(s), and to provide aging stability and hydrolytic stability.

The polyether oligomer having a number average molecular weight of at least 2000 g/mol and which comprises at least one radically (co)polymerizable reactive group may comprise a (linear) polyether backbone. The polyether oligomer backbone comprised in the polyether oligomer may be obtained by copolymerization of tetrahydrofuran units, ethylene oxide units, and optionally propylene oxide units. The molar ratio of these monomers may be in a range from 1:2.5 to 1:5, or even from 1:3 to 1:4.

The polyether oligomer for use herein may have a number average molecular weight more than 2000 g/mol, more than 2500 g/mol, more than 3000 g/mol, more than 3500 g/mol, or even more than 4000 g/mol.

The polyether oligomer for use herein may have a number average molecular weight of at most 20.000 g/mol, at most 15.000 g/mol, at most 12.000 g/mol, at most 10.000 g/mol, at most 9500 g/mol, at most 9000 g/mol, at most 8500 g/mol, or even at most 8000 g/mol.

The polyether oligomer for use herein may have a number average molecular weight in a range from 2000 to 20.000 g/mol, from 2000 to 15.000 g/mol, from 2000 to 12.000 g/mol, from 2500 to 10.000 g/mol, from 2500 to 9.000 g/mol, from 3000 to 8500 g/mol, from 3500 to 8000 g/mol or even from 4000 to 8000 g/mol.

In an advantageous aspect, the polyether oligomer for use in the present disclosure comprises at least two radically (co)polymerizable reactive groups.

According to another advantageous aspect, the at least one radically (co)polymerizable reactive group of the polyether oligomer is selected from the group consisting of ethylenically unsaturated groups. In other words, the polyether oligomer for use herein may be an ethylenically unsaturated compound.

In a more advantageous aspect of the disclosure, the ethylenically unsaturated groups comprised in the polyether oligomer are selected from the group consisting of (meth)acrylic groups, vinyl groups, styryl groups, and any combinations or mixtures thereof. More preferably, the ethylenically unsaturated groups are selected from the group consisting of methacrylic groups, acrylic groups, and any combinations or mixtures thereof.

In a particularly preferred aspect of the disclosure, the ethylenically unsaturated groups comprised in the polyether oligomer are methacrylic groups.

According to one advantageous aspect of the curable precursor of the disclosure, the polyether oligomer for use herein has the following formula: 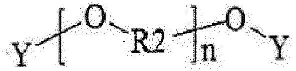 wherein:
Y is a radically (co)polymerizable reactive group, in particular an ethylenically unsaturated group;
each R2 is independently selected from the group consisting of alkylene groups having in particular from 2 to 6 carbons;
and n is an integer selected such that the number average molecular weight of the polyether oligomer is of at least 2000 g/mol.

In one particular aspect, n is selected such that the number average molecular weight is at least 2000 g/mol, at least 3000 g/mol, or even at least 4000 g/mol. In another particular aspect, n is selected such that the number average molecular weight is at most 20.000 g/mol, at most 15.000 g/mol, or even at most 10.000 g/mol. In still another particular aspect, n is selected such that the number average molecular weight is between 2000 and 20.000 g/mol, between 3000 and 15.000 g/mol, or even between 3000 and 10.000 g/mol, where all ranges are inclusive of the end points.

The curable precursor of the present disclosure may comprise from 1 to 50 wt.%, from 1 to 30 wt.%, from 1 to 20 wt.%, from 2 to 15 wt.%, or from 3 to 10 wt.% of the polyether oligomer, wherein the weight percentages are based on the total weight of the curable precursor.

The polyether oligomer is (co)polymerizable with the C₁-C₃₂(meth)acrylic acid ester monomers (i) and the ethylenically unsaturated acidic compound (ii) of the (meth)acrylate-based component (a).

The radically (co)polymerizable (meth)acrylate-based component (a) of the curable precursor disclosed herein may further comprise
(iii) ethylenically unsaturated monomers having a functional group and which are copolymerizable with the C₁-C₃₂(meth)acrylic acid ester monomers (i) and the ethylenically unsaturated acidic compound (ii) of the radically (co)polymerizable (meth)acrylate-based component (a).

Without wishing to be bound by theory, it is believed that the presence of ethylenically unsaturated monomers having a functional group in the (meth)acrylate-based component beneficially impacts its shear strength and adhesion properties. The ethylenically unsaturated monomers having a functional group are further believed to provide advantageous surface interactions with the thermally conductive particles, which in turn contribute to provide advantageous rheological profile to the curable precursor of the present disclosure.

The ethylenically unsaturated monomers having a functional group and for use herein may have a functional group selected from the group consisting of amine, hydroxyl, amide, isocyanate, epoxide, nitrile, and any combinations thereof.

The ethylenically unsaturated monomers having a functional group may be selected from the group consisting of methoxyethyl (meth)acrylate, ethoxyethyl (meth)acrylate, 2-hydroxyethyl (meth)acrylate, 2-aminoethyl (meth)acrylate, dimethylaminoethyl (meth)acrylate, diethylaminoethyl (meth)acrylate, N-vinyl pyrrolidone, N-vinyl caprolactam, (meth)acrylamide, N-vinylacetamide, 4-acryloyl morpholine, glycidyl (meth)acrylate, 2-isocyanato ethyl (meth)acrylate, tert-butylamino ethyl (meth)acrylate, acrylonitrile, and any mixtures thereof.

The radically (co)polymerizable (meth)acrylate-based component (a) of the curable precursor disclosed herein may comprise from 1 to 15 wt.%, from 2 to 12 wt.%, from 3 to 10 wt.%, from 4 to 10 wt.%, or even from 5 to 10 wt.%, of the ethylenically unsaturated monomers having a functional group, wherein the weight percentages are based on the total weight of the (meth)acrylate-based component.

The curable precursor disclosed herein may further comprise thermally conductive particles (e). The thermally conductive particles are used as a filler for the curable precursor to improve thermal conductivity of the cured composition.

The thermally conductive particles for use herein may be selected from the group consisting of metal oxides, metal nitrides, metal hydroxides, metallic particles, coated metallic particles, ceramic particles, coated ceramic particles, and any combinations or mixtures thereof.

Preferably, the thermally conductive particles are selected from the group consisting of aluminum oxide, aluminum hydroxide, boron nitride, aluminum nitride, silicon nitride, gallium nitride, silicon oxide, magnesium oxide, zinc oxide, zirconium oxide, tin oxide, copper oxide, chromium oxide, titanium oxide, silicon carbide, graphite, magnesium hydroxide, calcium hydroxide, carbon nanotubes, carbon black, carbon fibers, diamond, clay, aluminosilicate, calcium carbonate, barium titanate, potassium titanate, copper, silver, gold, nickel, aluminum, platinum, and any combinations or mixtures thereof.

More preferably, the thermally conductive particles are selected from the group consisting of aluminum oxide, aluminum hydroxide, boron nitride, and any combinations or mixtures thereof.

Even more preferably, the thermally conductive particles are selected from the group consisting of aluminum oxide, aluminum hydroxide, and any combinations or mixtures thereof.

The thermally conductive particles may comprise primary particles, agglomerates of primary particles, or combinations thereof.

The thermally conductive primary particles and agglomerates of primary particles may have isotropic shapes, anisotropic shapes, or combinations thereof.

The thermally conductive primary particles and agglomerates of primary particles may have spherical shapes, platelet shapes, or combinations thereof.

Exemplary thermally conductive primary particles and agglomerates of primary particles for use herein are described e.g. in EP 3 127 973 A1 (Wieneke et al.).

The mean particle size (d₅₀) of the thermally conductive primary particles and agglomerates of primary particles may be from 0.2 to 500 µm, or from 0.2 to 100 µm. The mean particle size (d₅₀) of the thermally conductive primary particles and agglomerates of primary particles can be measured by laser diffraction.

Through-plane thermal conductivity may become most critical in some applications, such as e.g. thermally-conductive filler applications. For these applications, isotropic thermally conductive particles (e.g., spherical particles) may be preferred, as asymmetrical fibers, flakes, or platelets may tend to align in the in-plane direction.

The thermally conductive particles may comprise thermally conductive particles provided with a surface functionalization. The surface functionalization of the thermally conductive particles may have a polarity selected from the group consisting of acidic-functional, basic-functional, hydrophobic, hydrophilic, and any combinations or mixtures thereof.

In one advantageous aspect of the disclosure, the surface functionalization of the thermally conductive particles comprises hydrophobic surface functionalization.

In the context of the present disclosure, the expression "hydrophobic surface functionalization" is meant to express that the surface of the thermally conductive particles, after suitable surface modification, has little or no affinity for polar substances, in particular water. The expression "hydrophilic surface functionalization" is meant to express that the surface of the thermally conductive particles, after suitable surface modification, has relatively high affinity for polar substances, in particular water.

The thermally conductive particles may be further provided with flame-retardancy properties or/and electrical insulation properties.

The curable precursor disclosed herein may comprise from 20 to 95 wt.%, from 30 to 90 wt.%, from 30 to 80 wt.%, from 40 to 90 wt.%, from 40 to 80 wt.%, from 50 to 90 wt.%, from 50 to 80 wt.%, from 60 to 90 wt.%, or from 65 to 85 wt.% of the thermally conductive particles, wherein the weight percentages are based on the total weight of the curable precursor.

The curable precursor disclosed herein may further comprise a base (f).

As used herein, by "base", it is meant an Arrhenius base. Further, by "base", it is meant a substance that, when dissolved in an aqueous solution, increases the concentration of hydroxide (OH⁻) ions in the solution.

The base may be a tertiary amine, or a combination of tertiary amines.

The tertiary amine has the formula R¹R²R³-N. where R¹, R² and R³ are independently alkyl groups or aryl groups. Suitable tertiary amine bases include, but are not limited to, p-toluidine ethoxylate (synonymous with N,N-bis(2-hydroxyethyl)-p-toluidine), N,N-dimethyl-p-toluidine, N,N-dimethylaniline, N,N-diethylaniline, and diisopropyl p-toluidine.

The base may have the function of an accelerator for polymerizing of the curable precursor.

The curable precursor may comprise from 0.1 to 5 wt.%, or from 0.1 to 3 wt.%, of the base, for example, based on the total weight of the curable precursor.

In some embodiments of the curable precursor disclosed herein, the curable precursor does not comprise a base.

The curable precursor disclosed herein may have a pH value of less than 7. Preferably, the curable precursor may have a pH value of less than 6. The curable precursor may have a pH value from 3 to 6, or from 4 to 5.

For measuring the pH value of the curable precursor, pH-indicator paper or strips may be wetted with water and the curable precursor may be applied to the pH-indicator paper or strips.

For measuring the pH value of the curable precursor, the components of the curable precursor may also be dissolved in water and the pH value may be measured using a pH-meter. For measuring the pH value of the curable precursor with a pH-meter, the percentage in grams of each water-soluble component of the curable precursor may be dissolved in an amount of water corresponding to the difference of the sum of these percentages to 100% in grams, and the pH value of the obtained aqueous solution is measured. The components of the curable precursor that are non-soluble in water are not added for the measurement as they will not dissolve in water and cannot contribute to the measurement. "Non-soluble in water" is to be understood as a solubility in water of 0.2 g/L or less at 23 °C, and "water-soluble component" is to be understood as a component having a solubility in water of more than 0.2 g/L at 23 °C. Also the particulate filler materials such as the thermally conductive particles are not added for the pH value measurement with a pH meter.

In some embodiments, the pH value of the curable precursor is less than 7 even when a base (f) is added. For example, the curable precursor may have a pH value of less than 7 if the curable precursor comprises a base in an amount of 0.1 to 5 wt.%, based on the total weight of the curable precursor.

Surprisingly, the nitroxide has the function of an inhibitor and can effectively prevent core polymerization not only despite the presence of acidic compounds in the curable precursor, but also when the curable precursor is acidic, i.e. when the pH value of the curable precursor is less than 7.

The curable precursor may further comprise additives such as dispersing agents, antioxidants, flame retardants, or dyes.

In some embodiments, the curable precursor disclosed herein is free of urethan (meth)acrylates.

According to one advantageous aspect of the disclosure, the curable precursor is (substantially) free of any of plasticizer(s), thixotropic agent(s), silicon-based compounds, halogen-based compounds, isocyanate-based compounds, and any combinations or mixtures thereof.

According to another advantageous aspect of the disclosure, the curable precursor is (substantially) free of solvent(s), in particular organic solvent(s).

According to yet another typical aspect of the disclosure, the curable precursor further comprises an initiator for radical polymerization.

The term "initiator" is meant to refer to a substance or a group of substances able to start or initiate or contribute to the curing process of the curable precursor, i.e. to start or initiate or contribute to the radical (co)polymerization of the (meth)acrylate based component.

The initiator used herein contains or is able to produce a free radical. Exemplary initiators for use herein include, but are not limited to, organic peroxides. Organic peroxides include hydroperoxides, ketone peroxides and diacyl peroxides. Examples for hydroperoxides are cumene hydroperoxide, tert-pentyl hydroperoxide, diisopropylbenzene hydroperoxide, and 1,1,3,3-tetramethylbutyl hydroperoxide. An example for a ketone peroxide is methyl ethyl ketone peroxide. An example for a diacyl peroxide is dibenzoyl peroxide. Examples for other organic peroxides are tert-butyl peroxybenzoate, dicumyl peroxide, 1,3-di-(2-tert-butylperoxyisopropyl)benzene, tert-butyl cumyl peroxide, and di-tert-butyl peroxide.

Preferably, dibenzoyl peroxide is used as initiator.

The curable precursor may comprise from 0.1 to 2 wt.%, or from 0.1 to 1 wt.% of the initiator, for example, based on the total weight of the curable precursor.

In one typical execution, the curable precursor of the present disclosure is in the form of a two-part composition having a first part and a second part, wherein the first part and the second part are kept separated prior to combining the two parts and forming the cured composition.

The first part comprises the a radically (co)polymerizable (meth)acrylate-based component comprising the C₁-C₃₂(meth)acrylic acid ester monomers and the ethylenically unsaturated acidic compound, the crosslinker and the nitroxide. The second part comprises the initiator for radical polymerization. For the first part, core polymerization of the curable precursor is effectively prevented by the nitroxide inhibitor, and the first part can be stored in e.g. 100 - 200 1 drums for several weeks or months. Curing can be started by combining the first part and the second part, and a fast curing, even at room temperature, is possible despite the stabilization of the first part.

In an advantageous aspect of the disclosure, the two parts of the curable precursor may be mixed with a mixing ratio of the first part to the second part in a range from 10:1 to 1:1, or from 5:1 to 3:1. Preferably, the two parts of the curable precursor may be mixed with a mixing ratio of the first part to the second part of 4:1.

Further disclosed herein is also a process for making a cured composition from the curable precursor disclosed herein, the process comprising
providing a curable precursor, wherein the curable precursor comprises
   (a) a radically (co)polymerizable (meth)acrylate-based component comprising
      (i) C₁-C₃₂(meth)acrylic acid ester monomers; and
      (ii) an ethylenically unsaturated acidic compound;
   (b) a crosslinker for the (meth)acrylate-based component, which comprises at least one acid-functional group derived from phosphoric acid and at least one radically (co)polymerizable reactive group; and
   (c) a nitroxide,
providing an initiator for radical polymerization of the curable precursor,
mixing the curable precursor and the initiator, and
curing the mixture of the curable precursor and the initiator.

All the particular and preferred aspects relating to, in particular, the (meth)acrylate-based component, the crosslinker, the nitroxide and the initiator which were described hereinabove in the context of the curable precursor, are fully applicable to the method as described above.

The first and the second part of the curable precursor can be extruded from a 2K cartridge or a 2K system using a static or dynamic mixer.

As used herein, "hardening" or "curing" a composition or mixture are used interchangeably and refer to (co)polymerization and/or crosslinking reactions including chemical (co)polymerization techniques (e. g., chemical reactions forming radicals effective to (co)polymerize radically (co)polymerizable compounds such as ethylenically unsaturated compounds) involving one or more materials included in the composition.

The curable precursor disclosed herein is curable without using any actinic radiation, in particular UV light.

The curable precursor disclosed herein is curable without using any additional thermal energy.

The curable precursor disclosed herein is curable without the need for expensive catalysts such as platinum.

Despite the stabilization of the reactive compounds of the curable precursor, such as the (meth)acrylate-based component and the crosslinker, by the nitroxide inhibitor, curing can be carried out very fast at room temperature, without the need of UV light or increased temperatures. After a curing time of only 30 minutes, an adhesive strength (overlap shear strength) of at least 1 MPa can be achieved.

The cured composition made by the process disclosed herein may be in the form of an adhesive gap filler.

In the context of the present disclosure, the expression "adhesive gap filler" is meant to designate an adhesive composition that is used to at least partially fill a spatial gap between a first and a second surface. After mixing the first and the second part of the curable precursor, the curable precursor can flow into the spatial gap between a first and a second surface and fill it, and after curing of the curable precursor the cured composition provides an adhesive bond between the first and the second surface with good mechanical properties and good adhesive strength. The first surface may be a battery cell of an electric vehicle, and the second surface may be a cooling plate. The adhesive gap filler may be a thermally conductive adhesive gap filler, by addition of thermally conductive particles.

Curing may be carried out at a temperature below 50 °C, or at a temperature of at most 40 °C, or at most 30 °C, or at room temperature (23 °C). Preferably, curing is carried out at room temperature (23 °C).

Typically, curing is carried out for at most 1 hour. Curing may be carried out for at most 45 minutes, or for at most 30 minutes. Typically, after a curing time of 30 minutes at room temperature (23 °C), a cured composition having an adhesive strength of at least 0.7 MPa is obtained. The adhesive strength of the cured composition after a curing time of 30 minutes at room temperature (23 °C) may be at least 1 MPa, or at least 2 MPa, or at least 3 MPa, depending on the amount of initiator that has been used.

According to an advantageous aspect, the curable precursor of the disclosure is curable at 23°C at a curing percentage greater than 90%, greater than 95%, greater than 98%, or even greater than 99%, after a curing time no greater than 72 hours, no greater than 48 hours, or even no greater than 24 hours, depending on the amount of initiator that has been used.

The curing time may be adjusted as desired depending on the targeted applications and manufacturing requirements.

The cured composition made by the process disclosed herein may have a thermal conductivity of at least 0.1 W/mK, at least 0.3 W/mK, at least 0.5 W/mK, at least 0.7 W/mK, at least 1.0 W/mK, at least 1.2 W/mK, or at least 1.5 W/mK, when measured according to the test method described in the experimental section.

The cured composition made by the process disclosed herein may have an overlap shear strength (OLS) of at least 0.5 MPa, at least 2.0 MPa, at least 2.5 MPa, at least 3.0 MPa, at least 3.5 MPa, at least 4.0 MPa, or at least 4.5 MPa, when measured according to the test method described in the experimental section.

The cured composition made by the process disclosed herein may have an overlap shear strength (OLS) in a range from 0.5 to 30.0 MPa, from 2.0 to 8.0 MPa, from 2.5 to 8.0 MPa, from 2.5 to 7.0 MPa, from 3.0 to 7.0 MPa, from 3.5 to 6.5 MPa, or from 4.0 to 6.0 MPa, when measured according to the test method described in the experimental section.

The cured composition may have an elongation at break of at least 5%, at least 8%, or at least 10%, when measured according to the test method described in the experimental section.

The curable precursor disclosed herein and the cured composition made from the curable precursor may be used for adhesive applications and/or for thermal management applications in the automotive industry.

The curable precursor and the cured composition as described above may be used for the manufacturing of a battery module comprising a plurality of battery cells, in particular for use in the automotive industry.

For embodiments of the curable precursor which comprise thermally conductive particles, the curable precursor and the cured composition may be used as thermally conductive adhesive for battery applications.

### Examples

### Test Methods

### Preparation of the formulations for testing:

The samples for testing the mechanical and thermal behavior are prepared from a 4:1 (vol ratio) mixture of two components (Part A : Part B) extruded from a 2K cartridge using a static mixer (standard 3M gold Quadro nozzle for 50 mL cartridges or SULZER MF 10-18 nozzles for 200 mL cartridges). The preparation of both parts is described hereinafter. Within the open time, the obtained paste is applied to the surface of the test panel as a film. The surface of test samples (25mm ^{∗} 100mm ^{∗} 4mm) for the overlap shear strength test (aluminum, grade EN AW2024T3) are sandblasted before bonding using pure corundum with a grain size of about 135 micrometers. The test samples are left at ambient room temperature (23°C +/- 2°C, 50% relative humidity +/-5%) for 7 days. The various performance testing are measured as described below.

### 1. Thermal Conductivity Test

The thermal conductivity of the cured compositions is measured according to ASTM E1461 at 23°C with Laser Flash Analysis (LFA) using Light Flash Apparatus LFA 467 HyperFlash^{®}, commercially available from Netzsch GmbH, Germany, on samples having a thickness of 2 mm.

### 2. Overlap Shear Strength (OLS) according, to DIN EN 1465

Overlap shear strength is determined according to DIN EN 1465 using a Zwick Z050 tensile tester (commercially available by Zwick GmbH & Co. KG, Ulm, Germany) operating at a cross head speed of 10 mm/min. For the preparation of an overlap shear strength test assembly, the paste resulting from the mixing of Part A and Part B is spackled onto one surface of a test panel. The aluminum EN AW2024T3 test panels are sandblasted before bonding. Afterwards, the sample is covered by a second aluminum strip forming an overlap joint of 13 mm. Hereby, the use of glass beads having a selected diameter distribution ensured formation of a bond line having a thickness of about 300 micrometers. The overlap joints are then clamped together using two binder clips and the test assemblies are further stored at room temperature for 7 days after bonding, and then placed into an air circulating oven for 30 minutes at 80 °C. The samples are either tested directly at room temperature or undergo aging and are tested thereafter. Five samples are measured for each of the examples and results averaged and reported in MPa.

### 3. Elongation at Break according to DIN EN ISO 527-2-5A

Elongation at break measurements are carried out according to DIN ISO 527-2-5A using a Zwick Z050 tensile tester (commercially available by Zwick GmbH & Co. KG, Ulm, Germany) operating at a cross head speed of 10 mm/min. Films having a thickness of about 2 mm are prepared according to the procedure described above. Five samples having a dog bone shape are stamped according to the geometry of DIN ISO 527-2-5A (dimensions 25 mm x 4 mm x 2 mm) and used for further mechanical testing. Measurements are done for each of the samples and the results are averaged and reported in percentage for the elongation at break.

### 4. Hardness Shore A according to DIN EN ISO 868

Hardness Shore A measurements are carried out according to DIN EN ISO 868 using a ZwickRoell 3115 (commercially available by Zwick GmbH & Co. KG, Ulm, Germany). Films having a thickness of about 1 mm are prepared according to the procedure described above. Three samples are used for hardness Shore A testing. Measurements are done for each of the samples and the results are averaged and reported.

### 5. Viscosity measurements

Viscosity of the test samples is measured at 20 °C with an Anton Paar rheometer MCR 302 using RheoCompass software from Anton Paar. The measurements were done using a frequency sweep at shear rates from 0.1 to 5 s⁻¹. 90 measurement points were taken one every 2 s at 0.1 s⁻¹, 20 measurement points were taken one every 2 s at 0.5 s⁻¹, 20 measurement points were taken one every 1 s at 1.0 s⁻¹, and 40 measurement points were taken one every 0.5 s at 5 s⁻¹.

### Raw materials

In the examples, the following raw materials are used.

2-Ethylhexylacrylate (2-EHA) is an acrylic acid ester monomer obtained from BASF AG, Germany.

Acrylic acid (AA) is a monomer obtained from BASF AG, Germany.

Diol-6000-DMA is a dimethacrylate polyether oligomer having a number average molecular weight of about 6000 g/mol, and which is obtained from 3M Espe GmbH, Germany.

GLP is a dimethacrylate crosslinker derived from phosphoric acid, and which is obtained from 3M Espe GmbH, Germany.

Cyclohexyl methacrylate (CHMA) is a methacrylic acid ester monomer obtained from BASF AG, Germany.

4-hydroxy-2,2,6,6-tetramethylpiperidine-1-oxyl (4-OH-TEMPO, TEMPOL) is a nitroxide obtained from Evonik Industries AG, Germany.

Martoxid TM 2320 is an aluminum oxide-based thermally conductive filler, which is obtained from Martinswerk, Germany.

BF083 is an aluminum hydroxide-based thermally conductive and flame retardant filler, which is obtained from Nikkeikin, Japan.

B53 is an aluminum hydroxide-based flame retardant and thermally conductive filler, which is obtained from Nikkeikin, Japan.

Space Rite S-11 is an aluminum hydroxide-based flame retardant and thermally conductive filler, which is obtained from J.M. Huber Corporation, New Jersey, USA.

Martinal TM 2550 is an aluminum hydroxide-based thermally conductive and flame retardant filler, which is obtained from Martinswerk, Germany.

Martinal TM 2590 is an aluminum hydroxide-based thermally conductive and flame retardant filler, which is obtained from Martinswerk, Germany.

Martinal ON908 is an aluminum hydroxide-based thermally conductive and flame retardant filler, which is obtained from Martinswerk, Germany.

Apyral 200SM is an aluminum hydroxide-based thermally conductive and flame retardant filler, which is obtained from Nabaltec, Germany.

Pergaquick A150 PM is p-toluidine ethoxylate, a base, which is obtained from Pergan GmbH, Germany.

BYK-W 9010 is a dispersing agent, which is obtained from BYK-Chemie GmbH, Germany. DISPERBYK-145 is a dispersing agent, which is obtained from BYK-Chemie GmbH, Germany.

Irganox 1076 is an antioxidant, which is obtained from BASF, Germany.

Irgafos 168 is an antioxidant, which is obtained from BASF, Germany.

4-Methoxyphenol (MEHQ) is an inhibitor, which is obtained from Sigma-Aldrich, Germany.

Alpha methyl styryl polyurea resin (AMSPU) is an α-methylstyrene functional polyether oligomer having urea linkage, which is used for diluting the initiator in the second part of the curable precursor. The α-methylstyrene functional oligomer having urea linkage was prepared as follows: 120 g (0.6 moles) of 3-isopropenyl-α,α-dimethylbenzyl isocyanate (commercially available as TMI from Cytec Industries, West Peterson, NJ, USA) and 600 g (0.6 amine equivalents) of amine-terminated polyether (D2000, difunctional amine-terminated polyether, commercially available as JeffamineTM D2000 from Huntsman Chemical Co., Houston, TX, USA, nominal reported MW 2000) were combined with stirring at room temperature in a glass vessel and allowed to stand at room temperature overnight. Infrared spectroscopy (IR) indicated complete reaction by disappearance of the 2265 cm-1 isocyanate band. The calculated molecular weight of the α-methylstyrene functional oligomer is 2460 g/mol.

Irgazin Red L 3670 HD is a red pigment, which is obtained from BASF AG, Germany.

Peroxan BP-Paste 50 PF-1 is dibenzoyl peroxide, an initiator for polymerization, which is obtained from Pergan GmbH, Germany.

### Examples 1 to 5 (EX1 to EX5) and Comparative Examples 1 and 2 (CEX1 and CEX2)

For Examples 1 to 5 and Comparative Example 1, curable precursors having the formulations as shown in Table 1 were prepared. The formulations in Table 1 represent the first part (Part A) of a two-part formulation of a curable precursor.

The curable precursors are prepared by combining the ingredients from the list of materials of Table 1 in a speed mixer (DAC 600.2 VAC-P, available from Hauschild Engineering, Germany) stirring at 2000 rpm for 90 seconds until a homogeneous mixture is achieved. The material is then slightly degassed to avoid entrapped air. The acrylic acid ester monomers, the ethylenically unsaturated acidic compound, the crosslinker and the nitroxide are added first, followed by polyether oligomer, the various thermally conductive particles and other additives in successive steps. Comparative Example 1 does not comprise any nitroxide. For each composition of a curable precursor listed in Table 1, 100 g were prepared (Part A).

**Table 1:**

| **Raw material** | **CEX1 Part A** [wt%] | **CEX2 Part A** [wt%] | **EX1 Part A** [wt%] | **EX2 Part A** [wt%] | **EX3 Part A** [wt%] | **EX4 Part A** [wt%] | **EX5 Part A** [wt%] | **EX6 Part A** [wt%] |
|---|---|---|---|---|---|---|---|---|
| 2-EHA | 8.53 | 8.50 | 8.53 | 8.53 | 8.53 | 8.53 | 8.53 | 8.70 |
| GLP | 0.65 | 0.65 | 0.65 | 0.65 | 0.65 | 0.65 | 0.65 | 0.65 |
| Acrylic acid | 0.50 | 0.50 | 0.50 | 0.50 | 0.50 | 0.50 | 0.50 | 0.5 |
| Diol-6000-DMA | 8.85 | 8.85 | 8.85 | 8.85 | 8.85 | 8.85 | 8.85 | 8.80 |
| Martoxid TM2320 | 38.11 | 38.07 | 38.11 | 38.11 | 38.11 | 38.11 | 38.11 | 38.00 |
| BF083 | 23.37 | 23.35 | 23.37 | 23.37 | 23.37 | 23.37 | 23.37 | 23.30 |
| B53 | 12.54 | 12.52 | 12.54 | 12.54 | 12.54 | 12.54 | 12.54 | 12.50 |
| Space Rite S-11 | 7.02 | 7.01 | 7.02 | 7.02 | 7.02 | 7.02 | 7.02 | 7.00 |
| Pergaquick A150 PM | 0.42 | 0.42 | 0.42 | 0.42 | 0.42 | 0.42 | 0.42 | 0.42 |
| Irganox 1076 | 0.01 | 0.02 | 0.01 | 0.01 | 0.01 | 0.01 | 0.01 | 0.01 |
| BYK-W 9010 | --- | --- | --- | --- | --- | --- | --- | 0.10 |
| DISPERBYK-145 | --- | 0.10 | --- | --- | --- | --- | --- | --- |
| MEHQ | --- | 0.005 | --- | --- | --- | --- | --- | 0.001 |
| Irgafos 168 | --- | --- | --- | --- | --- | --- | --- | 0.05 |
| 4-OH-TEMPO | --- | --- | 0.001 | 0.002 | 0.003 | 0.004 | 0.005 | 0.003 |

The stability of the curable precursors (Part A) regarding core polymerization was tested using glass containers, as glass containers have a limited oxygen diffusion. Before filling the glass containers, the curable precursor material was degassed in a Speedmixer for 1:30 min under vacuum (-900 mbar). The glass containers were fully filled with material (52.5 g material in a 25 ml glass container), and care has been taken that no air bubbles are in the material to ensure a low oxygen atmosphere. This experimental setup is a simulation of the situation in the middle of a drum having a volume of 100 - 200 Liter fully filled with material. For each of the formulations, three glass containers were filled.

The filled glass containers were stored at different temperatures (50°C, 65°C and 80°C) for accelerated aging of the test samples.

**Table 2:**

| **Example** | **Content of 4-OH-TEMPO [wt%]** | **Core polymerization stability test at 65 °C, 3 days** | **Core polymerization stability test at 65 °C, 5 days** |
|---|---|---|---|
| CEX1 | --- | Fully cured | Fully cured |
| EX1 | 0.001 | Viscosity increase, no core polymerization | Viscosity increase, no core polymerization |
| EX2 | 0.002 | stable | stable |
| EX3 | 0.003 | stable | stable |
| EX4 | 0.004 | stable | stable |
| EX5 | 0.005 | stable | stable |

As can be seen from table 2, the comparative example (CEX1) without addition of 4-OH-TEMPO fully cured already after 3 days at 65°C. Low amounts of 4-OH-TEMPO (Example 1) prevent a core polymerization but exhibit a viscosity increase after 3 days storage at 65°C. Using 0.002 wt% or more of 4-OH-TEMPO stabilize the formulation for a minimum of 5 days at 65°C (Examples 2 to 5).

For Examples 1 to 5, the pH value of the curable precursor was measured by dissolving the water-soluble components (i.e. the components having a water-solubility of more than 0.2 g/L at 23 °C) of the curable precursor in water and measuring the pH value of the aqueous solution. For the measurement, 0.5 g of acrylic acid, 0.65 g of GLP, and 0.42 g of Pergaquick A150 PM were dissolved in 98.43 g of water and the pH value of the aqueous solution was measured using a pH-meter. The pH value was < 3.

### Example 6 (EX6) and Comparative Example 2 (CEX2)

For Example 6 and Comparative Example 2, the first part of a two-part formulation of curable precursors having the formulations as shown in Table 1 are prepared as described above for Examples 1 to 5. Samples for testing of core polymerization stability are prepared as described above for Examples 1 to 5.

For Example 6 and Comparative Example 2, the first part (Part A) and the second part (Part B) of the two-part composition of curable precursors are prepared separately by combining the ingredients from the list of materials of Table 1 (Part A) and Table 3 (Part B) in a speed mixer (DAC 600.2 VAC-P, available from Hauschild Engineering, Germany) stirring at 2000 rpm for 90 seconds until a homogeneous mixture is achieved. The material is then slightly degassed to avoid entrapped air. For Part A, the acrylic acid ester monomers, the ethylenically unsaturated acidic compound, the crosslinker and the nitroxide are added first, followed by polyether oligomer, the various thermally conductive particles and other additives in successive steps. The initiator for radical polymerization is present solely in Part B. For Part B, the alpha methyl styryl polyurea resin is added first, followed by the various thermally conductive particles, and finally the peroxide initiator is added. During the mixing, the temperature of the mixing shall not exceed 40 °C. For each composition of a curable precursor listed in Table 1 (Part A) and in Table 3 (Part B), 100 g of the first part and 100 g of the second part were prepared.

Afterwards, the two parts are filled in a Part A : Part B = 4:1 volume ratio into a 2K cartridge and the mixture is applied to the surface of the test panel as described above. In Tables 1 and 3, all concentrations are given as wt.%. Comparative example CE2 does not comprise any nitroxide.

Overlap shear samples, dog-bone shape samples for elongation at break and samples for thermal conductivity measurements and for hardness measurements are cured for seven days at room temperature. Measurements are carried out as described above in the Test Methods Section.

Test results are shown in Table 4.

**Table 3:**

| **Raw material** | **Part B of EX6 and CEX2** [wt%] |
|---|---|
| Peroxan BP-Paste 50 PF-1 | 1.68 |
| AMSPU | 17.97 |
| Martoxid TM2320 | 40.06 |
| B53 | 40.06 |
| Irgazin red L 3670 HD | 0.01 |
| Irganox 1076 | 0.02 |
| Water dest. | 0.20 |

**Table 4:**

| | **CEX2** | **EX6** |
|---|---|---|
| | | |

| | **Part A : Part B = 4 : 1 cured (23 °C, 7 d)** | **Part A : Part B = 4 : 1 Cured (23 °C, 7 d)** |
|---|---|---|
| Thermal conductivity [W/mK] | 1.5 | 1.5 |
| Hardness Shore A | 94 | 92 |
| Overlap shear strength [MPa] | 4.8 | 4.5 |
| Elongation at break [%] | 11.6 | 10.0 |
| | | |

| | **Part A** | **Part A** |
|---|---|---|
| Core polymerization at 50 °C | < 24 h (completely polymerized) | Not observed after 21 d |
| Core polymerization at 80 °C | < 9 h (completely polymerized) | Not observed after 3 d |

As can be seen from table 4, Example 6 (with addition of 0.003 wt% 4-OH-TEMPO) exhibits a similar performance as Comparative Example 2 (without addition of 4-OH-TEMPO) but a highly increased stability regarding core polymerization. Whereas in Comparative Example 2 a core polymerization was observed after less than 24 h at 50 °C and less than 9 h at 80°C (composition completely polymerized in both cases), no core polymerization was observed after 21 d at 50°C and 3 d at 80°C for Example 6.

For Example 6, oscillating rheology was measured to determine the curing kinetic. The gel point (i.e. the point where storage and loss modulus become equivalent) is at around 9 minutes after the two parts of the two-part formulation have been combined. This shows that even with 0.003 wt% 4-OH-TEMPO the curing time at room temperature is fast.

### Examples 7 and 8 (EX7 and EX8) and Comparative Example 3 (CEX3)

For Examples 7 and 8 and Comparative Example 3, the first part (Part A) and the second part (Part B) of a two-part formulation of curable precursors are prepared separately by combining the ingredients from the list of materials of Table 5 (Part A) and Table 6 (Part B) in a planetary mixer and mixing until a homogeneous mixture is achieved. The material is then slightly degassed to avoid entrapped air. For Part A, the acrylic acid ester monomers and the polyether oligomer and the nitroxide are added first, followed by the various thermally conductive particles and other additives in successive steps. Finally, the ethylenically unsaturated acidic compound and the crosslinker are added, followed by the base after mixing. The initiator for radical polymerization is present solely in Part B. For Part B, the alpha methyl styryl polyurea resin is added first, followed by the various thermally conductive particles, and finally the peroxide initiator is added. During the mixing, the temperature of the mixing shall not exceed 40 °C. For each composition of a curable precursor listed in Table 5 (Part A) and in Table 6 (Part B), 500 L (1050 kg) of the first part and 300 L (630 kg) of the second part were prepared.

For Example 8 and Comparative Example 3, samples for testing of core polymerization stability at 50 °C and 80 °C are prepared from the first part (Part A) of the curable precursors as described above for Examples 1 to 5.

Test results are shown in Table 7.

**Table 5:**

| **Raw material** | **CEX3 Part A** [wt%] | **EX7 Part A** [wt%] | **EX8 Part A** [wt%] |
|---|---|---|---|
| 2-EHA | 8.50 | 8.70 | 9.61 |
| GLP | 0.65 | 0.65 | 0.87 |
| Acrylic acid | 0.50 | 0.50 | 0.74 |
| Diol-6000-DMA | 8.85 | 8.80 | 9.61 |
| Martoxid TM2320 | 38.07 | 38.00 | --- |
| BF083 | 23.35 | 23.30 | --- |
| B53 | 12.52 | 12.50 | 11.95 |
| SpaceRite S-11 | 7.01 | 7.00 | --- |
| Pergaquick A150 PM | 0.42 | 0.42 | 0.47 |
| Irganox 1076 | 0.02 | 0.01 | 0.01 |
| BYK-W 9010 | --- | 0.10 | --- |
| DISPERBYK-145 | 0.10 | --- | --- |
| MEHQ | 0.01 | 0.001 | --- |
| Irgafos 168 | --- | 0.05 | --- |
| 4-OH-TEMPO | --- | 0.003 | 0.005 |
| Cyclohexyl methacrylate | --- | --- | 1.49 |
| Martinal TM 2550 | --- | --- | 15.87 |
| Martinal TM 2590 | --- | --- | 12.62 |
| Martinal ON908 | --- | --- | 31.79 |
| Apyral 200SM | --- | --- | 4.96 |

**Table 6:**

| **Raw material** | **Part B of CEX3, EX7 and EX8** [wt%] |
|---|---|
| Peroxan BP-Paste 50 PF-1 | 1.68 |
| AMSPU | 17.97 |
| Martoxid TM2320 | 40.06 |
| B53 | 40.06 |
| Irgazin red L 3670 HD | 0.01 |
| Irganox 1076 | 0.02 |
| Water dest. | 0.2 |

**Table 7:**

| | **CEX3** | **EX8** |
|---|---|---|
| | | |

| | **Part A : Part B = 4 : 1 cured (23 °C, 7 d)** | **Part A : Part B = 4 : 1 Cured (23 °C, 7 d)** |
|---|---|---|
| Thermal conductivity [W/mK] | 1.5 | 1.5 |
| Hardness Shore A | 94 | 94 |
| Overlap shear strength [MPa] | 4.8 | 4.5 |
| Elongation at break [%] | 11.6 | 11.3 |
| | | |

| | **Part A** | **Part A** |
|---|---|---|
| Core polymerization at 50 °C | < 24 h (completely polymerized) | Not observed after 21 d |
| Core polymerization at 80 °C | < 9 h (completely polymerized) | Not observed after 3 d |
| Viscosity initial [Pa^{∗}s] | 298 | 245 |
| Viscosity after 6-month storage in 150L drum (23 °C) [Pa^{∗}s] | Not measurable due to core polymerization after less than 2 weeks | 425 |

As can be seen from Table 7, Example 8 (with addition of 0.003 wt% 4-OH-TEMPO) exhibits a similar performance as Comparative Example 3 (without addition of 4-OH-TEMPO) but a highly increased stability regarding core polymerization. Whereas for Comparative Example 3, core polymerization was observed after less than 24 h at 50 °C and less than 9 h at 80 °C (composition completely polymerized in both cases), no core polymerization was observed for Example 8 after 21 days at 50 °C and 3 days at 80 °C.

For Comparative Example 3, core polymerization was observed after less than 2 weeks at room temperature (23 °C) in a drum filled with 150 L of the composition (core polymerization in the middle of the drum), whereas no core polymerization was observed for Example 8 in a drum filled with 150 L of the composition after storage at room temperature for 6 months.

## Claims

1. A curable precursor of an adhesive composition, the curable precursor comprising:
(a) a radically (co)polymerizable (meth)acrylate-based component comprising
(i) C₁-C₃₂(meth)acrylic acid ester monomers; and
(ii) an ethylenically unsaturated acidic compound;
(b) a crosslinker for the (meth)acrylate-based component, which comprises at least one acid-functional group derived from phosphoric acid and at least one radically (co)polymerizable reactive group; and
(c) a nitroxide.

2. A curable precursor according to claim 1, wherein the C₁-C₃₂(meth)acrylic acid ester monomers are selected from the group consisting of iso-octyl (meth)acrylate, 2-ethylhexyl (meth)acrylate, 2-propylheptyl (meth)acrylate, butyl (meth)acrylate, cyclohexyl (meth)acrylate, methyl (meth)acrylate, benzyl (meth)acrylate, hydroxyethyl (meth)acrylate, hydroxypropyl (meth)acrylate, isobornyl (meth)acrylate, tetrahydrofurfuryl (meth)acrylate, and any mixtures thereof.

3. A curable precursor according to claim 1 or 2, wherein the ethylenically unsaturated acidic compound comprises monomers, oligomers, and polymers having ethylenic unsaturation and acid and/or acid-precursor functionality.

4. The curable precursor of any of claims 1 to 3, wherein the nitroxide is selected from the group consisting of 2,2,6,6-tetramethylpiperidine-1-oxyl (TEMPO), derivatives thereof, and combinations thereof.

5. The curable precursor of any of claims 1 to 4, wherein the nitroxide is 4-hydroxy-2,2,6,6-tetramethylpiperidine-1-oxyl (TEMPOL).

6. The curable precursor of any of claims 1 to 5, further comprising (d) a polyether oligomer having a number average molecular weight of at least 2000 g/mol and which comprises at least one radically (co)polymerizable reactive group.

7. The curable precursor of any of claims 1 to 6, wherein the radically (co)polymerizable (meth)acrylate-based component (a) further comprises
(iii) ethylenically unsaturated monomers having a functional group and which are copolymerizable with the C₁-C₃₂(meth)acrylic acid ester monomers (i) and the ethylenically unsaturated acidic compound (ii) of the radically (co)polymerizable (meth)acrylate-based component (a).

8. The curable precursor of any of claims 1 to 7, further comprising (e) a thermally conductive particles.

9. The curable precursor of any of claims 1 to 8, further comprising (f) a base.

10. The curable precursor of claim 9, wherein the base is a tertiary amine, or a combination of tertiary amines.

11. The curable precursor of any of claims 1 to 10, wherein the curable precursor does not comprise a base.

12. The curable precursor of any of claims 1 to 11, wherein the curable precursor further comprises an initiator for radical polymerization.

13. A process for making a cured composition from the curable precursor of any of the preceding claims, the process comprising
providing a curable precursor, wherein the curable precursor comprises
(a) a radically (co)polymerizable (meth)acrylate-based component comprising
(i) C₁-C₃₂(meth)acrylic acid ester monomers; and
(ii) an ethylenically unsaturated acidic compound;
(b) a crosslinker for the (meth)acrylate-based component, which comprises at least one acid-functional group derived from phosphoric acid and at least one radically (co)polymerizable reactive group; and
(c) a nitroxide,
providing an initiator for radical polymerization of the curable precursor,
mixing the curable precursor and the initiator, and
curing the mixture of the curable precursor and the initiator.

14. The process of claim 13, wherein curing is carried out at a temperature below 50 °C, preferably at room temperature (23 °C).

15. Use of a curable precursor according to any of claims 1 to 12, for adhesive applications and/or for thermal management applications in the automotive industry.
